# EUROPÄISCHE PATENTSCHRIFT

(11) **EP 3 894 726 B1**
(45) Veröffentlichungstag und Bekanntmachung des Hinweises auf die Patenterteilung: **26.02.2025**
(21) Anmeldenummer: 19820666.6
(22) Anmeldetag: 26.11.2019
(51) Int. Cl.: F16H 61/28, F16H 63/34, H02K 7/06, H02K 7/116

(54) **ROTOR MIT EINTEILIGEM GEWINDE, SOWIE ELEKTROMOTOR, AKTOR UND PARKSPERRE**
ROTOR WITH INTEGRALLY FORMED THREAD, ELECTRIC MOTOR, ACTUATOR, AND PARKING LOCK
ROTOR AVEC FILETAGE D'UNE SEULE PIÈCE ET MOTEUR ÉLECTRIQUE, ACTIONNEUR ET FREIN DE STATIONNEMENT

(30) Priorität: 10.12.2018 DE 102018131607
(43) Veröffentlichungstag der Anmeldung: 20.10.2021
(73) Patentinhaber: Schaeffler Technologies AG & Co. KG, 91074 Herzogenaurach (DE)
(72) Erfinder: MATYAS, Arthur-Richard, 77815 Bühl (DE); HAAS, Maximilian, 77815 Bühl (DE); BOHNERT, Michael, 77876 Kappelrodeck (DE); ZHOU, Jie, 76532 Baden-Baden (DE); BUNOUT, Felix, 76137 Karlsruhe (DE)
(86) Internationale Anmeldenummer: PCT/DE2019/101013
(87) Internationale Veröffentlichungsnummer: WO 2020/119853

(56) Entgegenhaltungen:
- EP-A1- 2 873 891
- DE-A1- 102013 213 706
- US-A1- 2013 278 098

## Beschreibung

Die Erfindung betrifft einen Rotor für einen Elektromotor nach dem Oberbegriff von Anspruch 1. Weiterhin betrifft die Erfindung einen Elektromotor mit einem derartigen Rotor, einen Aktor mit einem derartigen Elektromotor und eine Parksperre mit einem derartigen Aktor.

Es ist bekannt einen Rotor für einen Elektromotor beispielsweise in einer Parksperre für ein Automatikgetriebe in einem Kraftfahrzeug einzusetzen. In DE 10 2017 102 804 A1 wird eine Parksperre beschrieben, bei der ein Elektromotor eine Spindel antreibt, mit der sich eine Spindelmutter in Eingriff befindet. Die Spindelmutter ist drehfest in einer Führungsnut geführt. Wird der Elektromotor in Drehung versetzt, wird die Spindelmutter bewegt und dadurch die Parksperre betätigt.

Um Bauraum einzusparen ist es bekannt, die mechanische Übersetzung, die eine Drehbewegung in eine translatorische Bewegung umsetzt, in den Elektromotor zu integrieren. Üblicherweise wird in den Rotor des Elektromotors eine Spindelmutter eingepresst, die mit einer Spindelwelle formschlüssig verbunden wird. Eine Drehbewegung der mit dem Rotor drehbaren Spindelmutter wird damit in eine translatorische Bewegung der Spindelwelle umgewandelt, die beispielsweise eine Betätigung einer Parksperre bewirkt.

Die EP2873891A1 offenbart in seiner Fig.4 einen Rotor für einen Elektromotor gemäß dem Oberbegriff des Anspruchs 1.

Die Aufgabe der vorliegenden Erfindung besteht darin, einen Rotor in einem Elektromotor zu verbessern. Der Bauraum, Montageaufwand und die Herstellungskosten eines Rotors sollen verringert werden.

Wenigstens eine dieser Aufgaben wird durch einen Rotor für einen Elektromotor mit den Merkmalen nach Anspruch 1 gelöst. Entsprechend wird ein Rotor für einen Elektromotor vorgeschlagen, wobei der Rotor um eine Drehachse drehbar ist und einen ersten Außenumfang und ein im Bereich des ersten Außenumfangs angeordnetes Magnetfeldelement zur Erzeugung eines Magnetfelds zur Bewirkung einer Drehbewegung des Rotors aufweist, wobei dem Rotor ein Gewinde zur formschlüssigen Verbindung mit einem translatorisch bewegbaren Betätigungselement zugeordnet ist, wobei das Gewinde einteilig aus dem Rotor ausgeführt ist.

Dadurch kann der Rotor einfacher aufgebaut und eingebaut werden. Die Herstellungskosten und der Montageaufwand werden verringert. Der Rotor kann kleinere Abmessungen aufweisen. Der Bauraumbedarf und die Bauteileanzahl können verringert werden.

Das Magnetfeldelement kann ein Permanentmagnet oder eine Drahtspule sein. Der Permanentmagnet kann gesintert sein. Der Permanentmagnet kann innerhalb des Rotors in IPM (Interior Permanent Magnet) Anordnung oder auf dem Außenumfang in SPM (Surface Permanent Magnet) Anordnung mit dem Rotor befestigt sein. Das Magnetfeldelement kann mit dem Rotor fest verbunden sein, beispielsweise formschlüssig, kraftschlüssig oder stoffschlüssig mit dem Rotor verbunden sein. Das Magnetfeldelement kann mit dem Rotor verklebt sein.

Es können wenigstens zwei umfangsseitig verteilt angeordnete Magnetfeldelemente im Bereich des Außenumfangs angeordnet sein.

Das Gewinde kann eine Spindelmutter bilden, die mit dem als Spindelwelle ausgeführten translatorisch bewegbaren Betätigungselement formschlüssig verbunden werden kann. Das Gewinde kann als Innengewinde ausgeführt sein. Der Rotor kann aus einem ferromagnetischen Material bestehen.

In einer bevorzugten Ausführung der Erfindung weist der Rotor radial innen eine Aussparung auf, die einen Innenumfang des Rotors festlegt, wobei das Gewinde an dem Innenumfang ausgeführt ist. Die Aussparung kann konzentrisch zu der Drehachse sein. Die Aussparung kann eine Zentralbohrung sein.

Erfindungsgemäß ist der Rotor als Umformteil ausgeführt, aufweisend einen radial äußeren und den ersten Außenumfang festlegenden ersten Biegeabschnitt und einen radial inneren zweiten Biegeabschnitt, wobei der erste und zweite Biegeabschnitt auf einer ersten axialen Seite des Rotors einteilig miteinander verbunden sind und das Gewinde einteilig aus dem zweiten Biegeabschnitt ausgeführt ist. Das Umformteil kann ein Blechbauteil sein. Das Umformteil kann ein Tiefziehteil sein. Der zweite Biegeabschnitt kann einen Innenumfang des Rotors festlegen, wobei das Gewinde an dem Innenumfang ausgeführt ist. Der erste Biegeabschnitt kann den ersten Außenumfang des Rotors festlegen. Das Magnetfeldelement kann mit dem ersten Biegeabschnitt fest verbunden sein.

In einer vorteilhaften Ausführung der Erfindung weist der Rotor einen einteilig mit diesem ausgeführten Lageraufnahmebereich zur Aufnahme eines Lagers auf. Das Lager kann ein Wälzlager sein.

In einer speziellen Ausgestaltung der Erfindung ist der Lageraufnahmebereich an einem von dem ersten Außenumfang verschiedenen zweiten Außenumfang des Rotors angeordnet ist. Der zweite Außenumfang kann kleiner oder grösser als der erste Außenumfang sein. Das Lager durch ein Rollierverfahren mit dem Rotor verbunden werden. Das Lager kann formschlüssig mit dem Rotor verbunden sein. Durch das Rollierverfahren kann das Lager durch eine Umformung des Rotors gesichert sein.

In einer bevorzugten Ausführung der Erfindung weist der Rotor einen einteilig mit diesem ausgeführten Sensoraufnahmebereich zur Aufnahme eines Sensorbauteils eines Sensors auf. Der Sensor kann ein Drehsensor sein. Das Sensorbauteil kann ein Sensormagnet sein. Der Sensor kann zur Erfassung einer Drehlage des Rotors wirksam sein. Das Sensorbauteil kann unmittelbar mit dem Rotor verbunden sein. Das Sensorbauteil kann rund sein. Das Sensorbauteil kann konzentrisch mit der Drehachse an dem Rotor befestigt sein. Der Sensoraufnahmebereich kann an einer ersten Seite des Rotors angeordnet sein. Der Sensoraufnahmebereich kann konzentrisch zu der Drehachse sein. Das Sensorbauteil kann in dem Sensoraufnahmebereich eingepresst sein.

Zur Lösung wenigstens einer der zuvor genannten Aufgaben wird weiterhin ein Elektromotor mit einem Stator und einem Rotor mit wenigstens einem der vorstehenden Merkmale vorgeschlagen. Der Elektromotor kann ein bürstenloser Gleichstrommotor (BLDC) sein. Der Rotor kann radial innerhalb des Stators drehbar angeordnet sein. Der Elektromotor kann ein Innenläufermotor sein.

Zur Lösung wenigstens einer der zuvor genannten Aufgaben wird weiterhin ein Aktor mit einem Spindeltrieb und einem zuvor beschriebenen Elektromotor vorgeschlagen, wobei das Betätigungselement als Spindelwelle ausgeführt ist und das Gewinde eine Spindelmutter bildet, die mit der Spindelwelle formschlüssig verbindbar ist.

Zur Lösung wenigstens einer der zuvor genannten Aufgaben wird weiterhin eine Parksperre in einem Fahrzeug mit einem zuvor beschriebenen Aktor vorgeschlagen, wobei das Betätigungselement mit einer Sperrklinke wirksam verbunden ist und durch die translatorische Bewegung eine Freigabestellung oder eine Sperrstellung bewirken kann. Die Parksperre kann eine Drehbewegung eines Drehbauteils, beispielsweise eines Rastrings, begrenzen oder verhindern. Das Drehbauteil kann in einem Getriebe des Fahrzeugs angeordnet sein.

Weitere Vorteile und vorteilhafte Ausgestaltungen der Erfindung ergeben sich aus der Figurenbeschreibung und den Abbildungen.

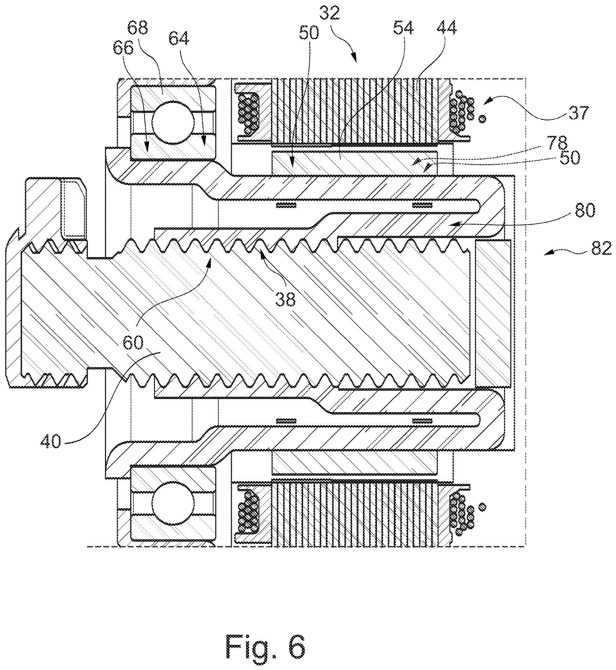

Die Erfindung wird im Folgenden unter Bezugnahme auf die Abbildungen ausführlich beschrieben, wobei nur die Fig.6 einen erfindungsgemäßen Rotor zeigt, also einen Rotor, der unter den Wortlaut des Anspruchs 1 fällt.

Es zeigen im Einzelnen:
Figur 1: Einen Querschnitt durch eine Parksperre, die nicht unter den Wortlaut des Anspruchs 8 fällt.
Figur 2: Einen Querschnitt durch einen Aktor, der nicht unter den Wortlaut des Anspruchs 7 fällt.
Figur 3: Einen Querschnitt durch einen Rotor, der nicht unter den Wortlaut des Anspruchs 1 fällt.
Figur 4: Eine räumliche Ansicht eines Rotors, der nicht unter den Wortlaut des Anspruchs 1 fällt.
Figur 5: Eine andere räumliche Ansicht des Rotors in Figur 4.
Figur 6: Einen Querschnitt durch einen Elektromotor in einer speziellen Ausführungsform der Erfindung.

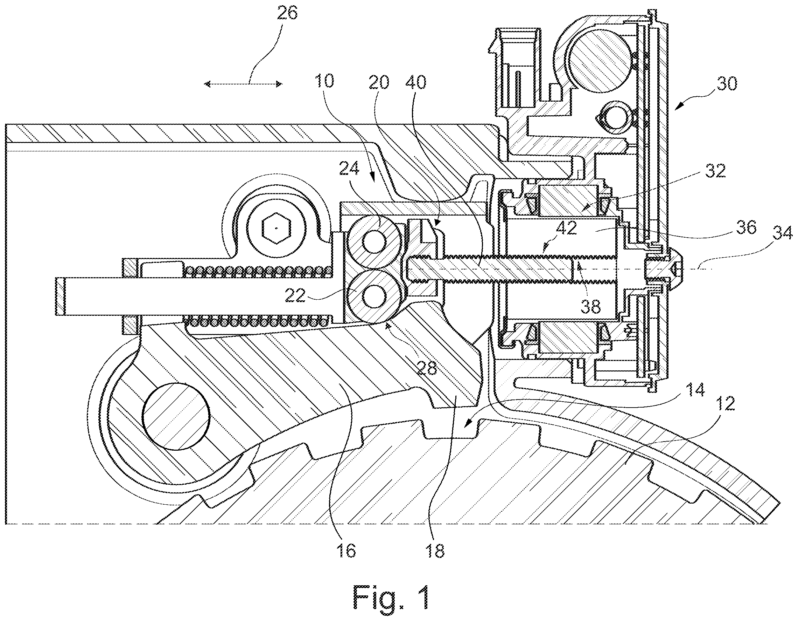

Figur 1 zeigt einen Querschnitt durch eine Parksperre 10, die nicht unter den Wortlaut des Anspruchs 8 fällt.

Die Parksperre 10 ist in einem Fahrzeug zur Beschränkung einer Drehbewegung eines Rastrings 12, beispielsweise in einem Getriebe, eingebaut. Der Rastring 12 weist an seinem Außenumfang eine Rastverzahnung 14 auf. Die Parksperre 10 umfasst eine Sperrklinke 16, die mit einem Klinkenzahn 18 formschlüssig mit dem Rastring 12 verbunden werden kann und dabei eine Drehbewegung des Rastrings 12 beschränkt oder verhindert.

Die Sperrklinke 16 ist drehbar und durch eine Spannfeder vorgespannt. Ist die Parksperre 10 in einer Freigabestellung, dann liegt der Klinkenzahn 18 außerhalb der Rastverzahnung 14. In einer Sperrstellung greift der Klinkenzahn 18 in die Rastverzahnung 14 formschlüssig ein. Der Klinkenzahn 18 bewegt sich mit einer Drehung der Sperrklinke 16 hin zu oder weg von dem Rastring 12.

Die Betätigung der Parksperre 10 erfolgt durch einen Betätigungsschlitten 20, der eine erste Rolle 22 und eine zweite Rolle 24 aufweist und in eine axiale Richtung 26 translatorisch verschiebbar ist. In der Freigabestellung ist der Betätigungsschlitten 20 in einer linken Position und bei der Sperrstellung in einer rechten Position. Durch eine Rampe 28 an der Sperrklinke 16 ist diese in der linken Position durch die Spannkraft der Spannfeder weg von dem Rastring 12 ausgerichtet. Wird der Betätigungsschlitten 20 zur Einleitung einer Sperrstellung nach rechts bewegt, dann rollt die erste Rolle 22 auf der Rampe 28 ab und dreht die Sperrklinke 16, womit der Klinkenzahn 18 in Eingriff mit der Rastverzahnung 14 des Rastrings 12 gebracht wird und die Parksperre eine Sperrstellung einnimmt.

Die axiale Verschiebung des Betätigungsschlittens 20 wird durch einen Aktor 30 bewirkt, der einen Elektromotor 32 umfasst. Der Elektromotor 32 weist einen um eine Drehachse 34 drehbaren Rotor 36 auf, dem ein Gewinde 38 zur formschlüssigen Verbindung mit einem in die axiale Richtung 26 translatorisch bewegbaren Betätigungselement 40 zugeordnet ist. Das Betätigungselement 40 ist als Spindelwelle und das Gewinde 38 als Spindelmutter ausgeführt, die zusammen einen Spindeltrieb 42 bilden, der eine Drehbewegung des Rotors 36 in eine translatorische Bewegung des Betätigungselements 40 umwandelt und damit eine mechanische Übersetzung bewirkt.

Das Betätigungselement 40 ist mit dem Betätigungsschlitten 20 verbunden und eine Bewegung des Betätigungselements 40 führt zu einer entsprechenden Bewegung des Betätigungsschlittens 20, der wiederum die Sperrklinke 16 auslenkt. Die Übersetzung der Drehbewegung des Rotors 36 in die axiale Bewegung des Betätigungselements 40 ist innerhalb des Elektromotors 32 verwirklicht, wodurch bereits Bauraum für eine getrennt von dem Elektromotor 32 angeordnete mechanische Übersetzung eingespart werden kann.

Der Bauraum kann weiter verringert werden und die Herstellungskosten und der Montageaufwand können gesenkt werden, indem das Gewinde 38 einteilig aus dem Rotor 36 ausgeführt ist. Eine getrennt von dem Rotor 36 vorgesehene Spindelmutter zur Bewirkung der mechanischen Übersetzung kann damit entbehrlich sein. Die Anzahl der benötigten Teile für die Umsetzung der mechanischen Übersetzung kann verringert werden.

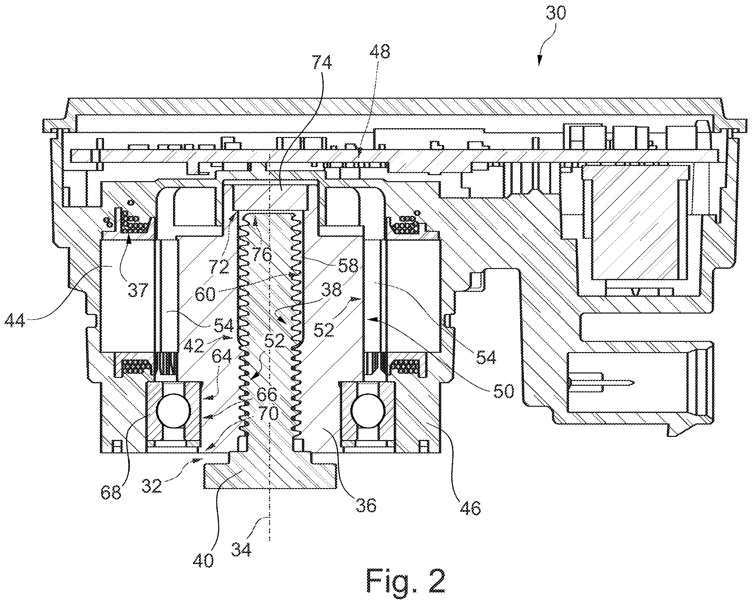

In Figur 2 ist ein Querschnitt durch einen Aktor 30, der nicht unter den Wortlaut des Anspruchs 7 fällt. Der Aktor 30 umfasst einen als bürstenloser Gleichstrommotor (BLDC) ausgeführten Elektromotor 32, der einen Stator 44 und einen um eine Drehachse 34 drehbaren Rotor 36 aufweist. Ein radial außerhalb des Rotors 36 angeordneter Stator 44 weist umfangsseitig verteilt angeordnete Nuten auf, in denen eine Drahtwicklung 37 zur Kommutierung des Elektromotors 32 angeordnet ist. Der Stator 44 ist vorzugsweise als Blechpaket ausgeführt und mit einem Aktorgehäuse 46 fest verbunden, das eine Steuerelektronik 48 aufnimmt, mit der der Elektromotor 32 gesteuert werden kann. Der Rotor 36 weist einen ersten Außenumfang 50 auf. In dem Bereich 52 des ersten Außenumfangs 50 sind mehrere Magnetfeldelemente 54 jeweils zur Erzeugung eines Magnetfelds zur Bewirkung einer Drehbewegung des Rotors 36 um die Drehachse 34 umfangsseitig verteilt angeordnet. Die Magnetfeldelemente 54 sind jeweils gesinterte Permanentmagnete, die auf dem ersten Außenumfang 50 in SPM (Surface Permanent Magnet) Anordnung befestigt sind. Die Magnetfeldelemente 54 können mit dem Rotor 36 verklebt sein.

Der Elektromotor 32 ist ein Innenläufermotor, bei dem der Rotor 36 radial innerhalb von dem Stator 44 angeordnet ist. Der Rotor 36 ist ein Sinterteil, das aus unter Anwendung eines Drucks und einer Erwärmung bis zu einer vorgegebenen Herstellungstemperatur gesintertem feinkörnigen keramischen oder metallischen Stoff hergestellt ist. Die Herstellungstemperatur ist vorzugsweise unterhalb der Schmelztemperatur des Stoffs oder zumindest eines der das Sinterteil bildenden Stoffe. Dadurch kann die Form des Rotors 36 erhalten bleiben und die mechanische Belastbarkeit kann vergrößert werden. Das Material, aus dem der Rotor 36 besteht, ist bevorzugt ferromagnetisch um den Wirkungsgrad des Elektromotors 32 zu steigern.

Der Rotor 36 weist radial innen eine konzentrische zu der Drehachse 34 angeordnete Aussparung 58, beispielsweise eine Zentralbohrung auf, die einen Innenumfang 60 des Rotors 36 festlegt. An dem Innenumfang 60 ist eine Gewinde 38, hier ein Innengewinde, einteilig aus dem Rotor 36 ausgeführt, das mit einem Betätigungselement 40 formschlüssig verbunden ist. Das Betätigungselement 40 weist ein dem Gewinde 38 entsprechendes Außengewinde 62 auf und eine Drehbewegung des Rotors 36 wird durch diese mechanische Übersetzung in eine translatorische Bewegung des Betätigungselement 40, beispielsweise zur Betätigung einer Parksperre, umgesetzt. Das Betätigungselement 40 ist hier als Spindelwelle eines Spindeltriebs 42 ausgeführt.

Der Rotor 36 weist an einem von dem ersten Außenumfang 50 verschiedenen zweiten Außenumfang 64 des Rotors 36 einen einteilig mit diesem ausgeführten Lageraufnahmebereich 66 zur Aufnahme eines Lagers 68 auf. Das Lager 68 ist als Wälzlager ausgeführt und kann durch ein Rollierverfahren formschlüssig mit dem Rotor 36 verbunden werden. Beispielsweise kann das Lager 68 durch das Rollierverfahren über eine Umformung 70 des Rotors 36 gesichert sein.

Der Rotor 36 umfasst weiterhin einen einteilig mit diesem ausgeführten Sensoraufnahmebereich 72 zur Aufnahme eines Sensorbauteils 74 eines Sensors 76 auf. Der Sensor 76 ist ein Drehsensor zur Erfassung einer Drehlage des Rotors 26 und das Sensorbauteil 74 ist ein runder und konzentrisch zu der Drehachse 34 mit dem Rotor 36 befestigter Sensormagnet, der unmittelbar mit dem Rotor 36 verbunden ist.

Der Rotor 36 ist besonders bauraumsparend ausgeführt, indem einteilig mit diesem ein Lageraufnahmebereich 66, ein Sensoraufnahmebereich 72 und eine Spindelmutter ausgeführt ist. Dadurch kann auch der Montageaufwand zur Herstellung des Elektromotors 32 gesenkt werden.

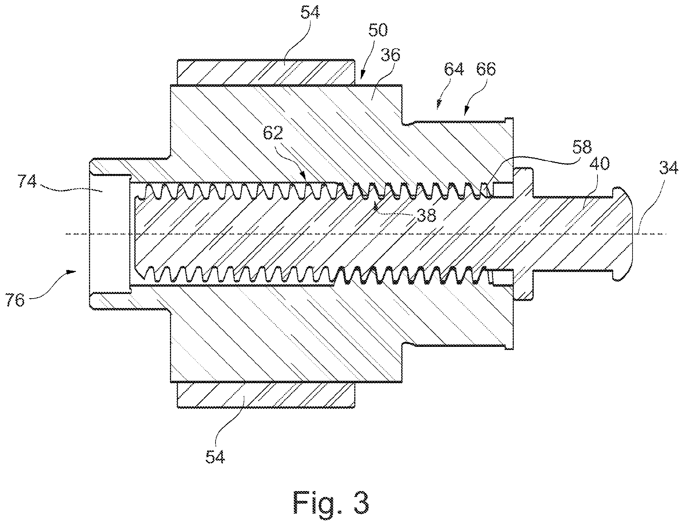

Figur 3 zeigt einen Querschnitt durch einen Rotor, der nicht unter den Wortlaut des Anspruchs 1 fällt.

An einem ersten Außenumfang 50 des Rotors 36 sind mehrere umfangsseitig verteilt angeordnete Magnetfeldelemente 54 befestigt. Die Magnetfeldelemente 54 sind in SPM Anordnung mit dem ersten Außenumfang 50 verklebt. An einem zweiten Außenumfang 64, der bevorzugt kleiner als der erste Außenumfang 50 ist, ist ein Lageraufnahmebereich 66 einteilig mit dem Rotor 36 ausgeführt, an dem ein hier nicht dargestelltes Lager aufnehmbar und fest mit dem Rotor verbindbar ist.

Weiterhin ist ein Sensoraufnahmebereich 72 einteilig mit dem Rotor 36 ausgeführt. Darin ist ein Sensorbauteil 74 eines Sensors 76 zur Erkennung einer Drehlage des Rotors 36 konzentrisch zu der Drehachse 34 aufgenommen. Das Sensorbauteil 74 kann ein Sensormagnet sein, der in dem Rotor 36 eingepresst ist.

Der Rotor 36 ist ein Sinterteil und in einer radial innen an dem Rotor 36 angeordneten Aussparung 58 ist ein Gewinde 38 einteilig mit dem Rotor 36 ausgeführt. Das Gewinde 38 ist ein Innengewinde. In dem Innengewinde ist ein Betätigungselement 40 mit einem entsprechenden Außengewinde 62 formschlüssig aufgenommen. Dadurch kann eine Drehbewegung des Rotors 36 in eine axiale Bewegung des Betätigungselements 40 übersetzt werden.

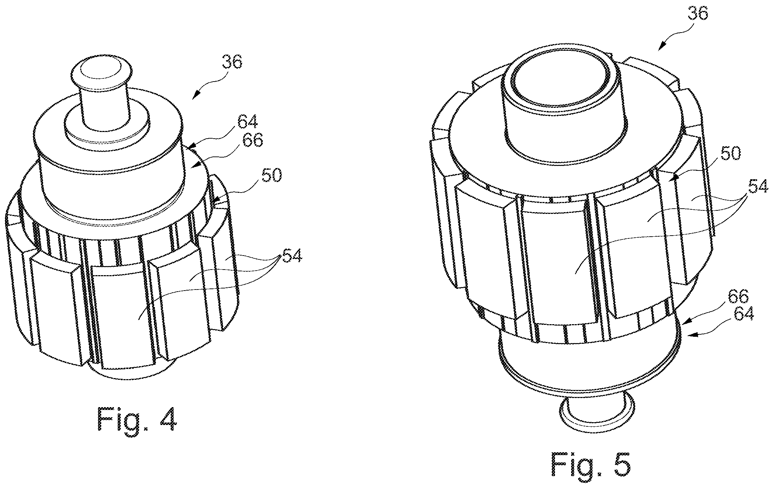

In Figur 4 ist eine räumliche Ansicht eines Rotors, der nicht unter den Wortlaut des Anspruchs 1 fällt, dargestellt. Figur 5 zeigt eine andere räumliche Ansicht des Rotors in Figur 4. Der Rotor 36 weist an einem ersten Außenumfang 50 umfangsseitig verteilt angeordnete Magnetfeldelemente 54 auf. Die Magnetfeldelemente 54 können in SPM Anordnung an dem Rotor 36 befestigte Permanentmagnete sein.

Der Rotor 36 weist an einem zweiten Außenumfang 64, der insbesondere kleiner als der erste Außenumfang 50 ist, einen Lageraufnahmebereich 66 zur Aufnahme eines Lagers, beispielsweise eines Wälzlagers, auf.

In Figur 6 ist ein Querschnitt durch einen Elektromotor 32 in einer speziellen Ausführungsform der Erfindung dargestellt. Ein radial außerhalb des Rotors 36 angeordneter Stator 44 weist umfangsseitig verteilt angeordnete Nuten auf, in denen eine Drahtwicklung 37 zur Kommutierung des Elektromotors 32 angeordnet ist. Der Stator 44 ist als Blechpaket ausgeführt.

Der Rotor 36 des Elektromotors 32 ist als Umformteil, insbesondere als Tiefziehteil, ausgeführt und umfasst einen radial äußeren und den ersten Außenumfang 50 festlegenden ersten Biegeabschnitt 78 und einen radial inneren zweiten Biegeabschnitt 80. Der erste und zweite Biegeabschnitt 78, 80 sind auf einer ersten axialen Seite 82 des Rotors 36 einteilig miteinander verbunden. Das Gewinde 38 zur Verbindung mit einem Betätigungselement 40 ist einteilig aus dem zweiten Biegeabschnitt 80 ausgeführt. Der zweite Biegeabschnitt 80 legt dabei einen Innenumfang 60 des Rotors 36 fest, wobei das Gewinde 38 als Innengewinde an dem Innenumfang 60 ausgeführt ist.

Der erste Biegeabschnitt 78 legt den ersten Außenumfang 50 des Rotors fest, an dem die umfangsseitig verteilt angeordneten Magnetfeldelemente 54 fest verbunden sind. An einem zweiten Außenumfang 64 des Rotors 36, hier an dem ersten Biegeabschnitt 78, ist ein Lageraufnahmebereich 66 zur Aufnahme eines Lagers 68 einteilig aus dem Rotor 36 ausgeführt. Der zweite Außenumfang 64 ist dabei grösser als der erste Außenumfang 50.

### Bezugszeichenliste

- 10: Parksperre
- 12: Rastring
- 14: Rastverzahnung
- 16: Sperrklinke
- 18: Klinkenzahn
- 20: Betätigungsschlitten
- 22: erste Rolle
- 24: zweite Rolle
- 26: axiale Richtung
- 28: Rampe
- 30: Aktor
- 32: Elektromotor
- 34: Drehachse
- 36: Rotor
- 37: Drahtwicklung
- 38: Gewinde
- 40: Betätigungselement
- 42: Spindeltrieb
- 44: Stator
- 46: Aktorgehäuse
- 48: Steuerelektronik
- 50: erster Außenumfang
- 52: Bereich
- 54: Magnetfeldelement
- 58: Aussparung
- 60: Innenumfang
- 62: Außengewinde
- 64: zweiter Außenumfang
- 66: Lageraufnahmebereich
- 68: Lager
- 70: Umformung
- 72: Sensoraufnahmebereich
- 74: Sensorbauteil
- 76: Sensor
- 78: erster Biegeabschnitt
- 80: zweiter Biegeabschnitt
- 82: axiale Seite

## Patentansprüche

1. Rotor (36) für einen Elektromotor (32), wobei
der Rotor (36) um eine Drehachse (34) drehbar ist und einen ersten Außenumfang (50) und ein im Bereich des ersten Außenumfangs (50) angeordnetes Magnetfeldelement (54) zur Erzeugung eines Magnetfelds zur Bewirkung einer Drehbewegung des Rotors (36) aufweist, und
dem Rotor (36) ein Gewinde (38) zur formschlüssigen Verbindung mit einem translatorisch bewegbaren Betätigungselement (40) zugeordnet ist,
wobei das Gewinde (38) einteilig aus dem Rotor (36) ausgeführt ist, **dadurch gekennzeichnet, dass**
der Rotor (36) als Umformteil ausgeführt ist, aufweisend einen radial äußeren und den ersten Außenumfang (50) festlegenden ersten Biegeabschnitt (78) und einen radial inneren zweiten Biegeabschnitt (80), und
der erste und zweite Biegeabschnitt (78, 80) auf einer ersten axialen Seite (82) des Rotors einteilig miteinander verbunden sind und das Gewinde (38) einteilig aus dem zweiten Biegeabschnitt (80) ausgeführt ist.

2. Rotor (36) nach Anspruch 1, **dadurch gekennzeichnet, dass**
der Rotor (36) eine radial innen angeordnete Aussparung (58) aufweist, die einen Innenumfang (60) des Rotors (36) festlegt, und
das Gewinde (38) an dem Innenumfang (60) ausgeführt ist.

3. Rotor (36) nach einem der vorangehenden Ansprüche, **dadurch gekennzeichnet, dass** der Rotor (36) einen einteilig mit diesem ausgeführten Lageraufnahmebereich (66) zur Aufnahme eines Lagers (68) aufweist.

4. Rotor (36) nach Anspruch 3, **dadurch gekennzeichnet, dass** der Lageraufnahmebereich (66) an einem von dem ersten Außenumfang (50) verschiedenen zweiten Außenumfang (64) des Rotors (36) angeordnet ist.

5. Rotor (36) nach einem der vorangehenden Ansprüche, **dadurch gekennzeichnet, dass** der Rotor (36) einen einteilig mit diesem ausgeführten Sensoraufnahmebereich (72) zur Aufnahme eines Sensorbauteils (74) eines Sensors (76) aufweist.

6. Elektromotor (32) mit einem Stator (44) und einem Rotor (36) nach einem der vorangehenden Ansprüche.

7. Aktor (30) mit einem Spindeltrieb (42) und einem Elektromotor (32) nach Anspruch 6, wobei das Betätigungselement (40) als Spindelwelle ausgeführt ist und das Gewinde (38) eine Spindelmutter bildet, die mit der Spindelwelle formschlüssig verbindbar ist.

8. Parksperre (10) in einem Fahrzeug mit einem Aktor (30) nach Anspruch 7, wobei das Betätigungselement (40) mit einer Sperrklinke (16) wirksam verbunden ist und durch die Sperrklinke (16) bei einer translatorischen Bewegung des Betätigungselements (40) eine Freigabestellung oder eine Sperrstellung bewirkbar ist.

## Claims

1. A rotor (36) for an electric motor (32), wherein
the rotor (36) can be rotated about a rotational axis (34) and has a first outer circumference (50) and a magnetic field element (54) arranged in the region of the first outer circumference (50) for generating a magnetic field for effecting a rotational movement of the rotor (36), and
the rotor (36) is assigned a thread (38) for form-fitting connection with a translationally moveable actuation element (40),
wherein the thread (38) is integrally formed with the rotor (36), **characterised in that**
the rotor (36) is designed as a formed part, having a radially outer first bending section (78) defining the first outer circumference (50) and a radially inner second bending section (80), and the first and second bending sections (78, 80) are integrally connected to one another on a first axial side (82) of the rotor and the thread (38) is integrally formed from the second bending section (80).

2. The rotor (36) according to claim 1, **characterised in that**
the rotor (36) has a radially inwardly arranged recess (58) that defines an inner circumference (60) of the rotor (36), and
the thread (38) is formed on the inner circumference (60).

3. The rotor (36) according to any one of the preceding claims, **characterised in that** the rotor (36) has a bearing receiving region (66) integrally formed therewith for receiving a bearing (68).

4. The rotor (36) according to claim 3, **characterised in that** the bearing receiving region (66) is arranged on a second outer circumference (64) of the rotor (36) which is different from the first outer circumference (50).

5. The rotor (36) according to any one of the preceding claims, **characterised in that** the rotor (36) has a sensor receiving region (72) integrally formed therewith for receiving a sensor component (74) of a sensor (76).

6. An electric motor (32) having a stator (44) and a rotor (36) according to any one of the preceding claims.

7. An actuator (30) having a spindle drive (42) and an electric motor (32) according to claim 6, wherein the actuation element (40) is designed as a spindle shaft and the thread (38) forms a spindle nut that can be form-fittingly connected to the spindle shaft.

8. A parking lock (10) in a vehicle with an actuator (30) according to claim 7, wherein the actuation element (40) is operatively connected to a pawl (16) and a release position or a locked position can be effected by the pawl (16) during a translational movement of the actuation element (40).

## Revendications

1. Rotor (36) pour un moteur électrique (32), dans lequel
le rotor (36) peut être entraîné en rotation autour d'un axe de rotation (34) et présente une première circonférence externe (50) et un élément de champ magnétique (54) agencé dans la zone de la première circonférence externe (50) destiné à la production d'un champ magnétique pour entraîner un mouvement de rotation du rotor (36) et
un filetage (38) est associé au rotor (36) pour la liaison par complémentarité de forme avec un élément d'actionnement (40) mobile en translation,
dans lequel le filetage (38) est réalisé d'une seule pièce à partir du rotor (36), **caractérisé en ce que**
le rotor (36) est réalisé comme une pièce de déformation, présentant une première section de flexion (78) radialement externe et définissant la première circonférence externe (50) et une seconde section de flexion (80) radialement interne, et
les première et seconde sections de flexion (78, 80) sont reliées l'une à l'autre d'une seule pièce sur un premier côté axial (82) du rotor et le filetage (38) est réalisé d'une seule pièce à partir de la seconde section de flexion (80).

2. Rotor (36) selon la revendication 1, **caractérisé en ce que**
le rotor (36) présente un évidement (58) agencé radialement à l'intérieur, qui définit une circonférence interne (60) du rotor (36), et
le filetage (38) est réalisé sur la circonférence interne (60).

3. Rotor (36) selon l'une quelconque des revendications précédentes, **caractérisé en ce que** le rotor (36) présente une zone de réception de palier (66) réalisée d'une seule pièce avec celui-ci afin de recevoir un palier (68).

4. Rotor (36) selon la revendication 3, **caractérisé en ce que** la zone de réception de palier (66) est agencée sur une seconde circonférence externe (64) du rotor (36) différente de la première circonférence externe (50).

5. Rotor (36) selon l'une quelconque des revendications précédentes, **caractérisé en ce que** le rotor (36) présente une zone de réception de capteur (72) réalisée d'une seule pièce avec celui-ci afin de recevoir un composant de capteur (74) d'un capteur (76).

6. Moteur électrique (32) comportant un stator (44) et un rotor (36) selon l'une quelconque des revendications précédentes.

7. Actionneur (30) comportant un entraînement à broche (42) et un moteur électrique (32) selon la revendication 6, dans lequel l'élément d'actionnement (40) est réalisé comme un arbre de broche et le filetage (38) forme un écrou de broche, qui peut être relié par complémentarité de forme à l'arbre de broche.

8. Frein de stationnement (10) dans un véhicule comportant un actionneur (30) selon la revendication 7, dans lequel l'élément d'actionnement (40) est relié de manière active à un cliquet d'arrêt (16) et une position de libération ou une position de blocage peut être entraînée par le biais du cliquet d'arrêt (16) lors d'un mouvement de translation de l'élément d'actionnement (40).
